# EUROPÄISCHE PATENTSCHRIFT

(11) **EP 3 084 171 B1**
(45) Veröffentlichungstag und Bekanntmachung des Hinweises auf die Patenterteilung: **13.06.2018**
(21) Anmeldenummer: 14843231.3
(22) Anmeldetag: 19.12.2014
(51) Int. Cl.: F02B 75/04

(54) **KOPPELGLIED FÜR EINEN MEHRGELENKSKURBELTRIEB SOWIE MEHRGELENKSKURBELTRIEB**
COUPLING ELEMENT FOR A MULTI-JOINT CRANK DRIVE AND MULTI-JOINT CRANK DRIVE
ORGANE D'ACCOUPLEMENT POUR EMBIELLAGE À PLUSIEURS ARTICULATIONS ET EMBIELLAGE À PLUSIEURS ARTICULATIONS

(30) Priorität: 20.12.2013 DE 102013021980
(43) Veröffentlichungstag der Anmeldung: 26.10.2016
(73) Patentinhaber: Audi AG, 85045 Ingolstadt (DE)
(72) Erfinder: BRENDEL, Matthias, 85049 Ingolstadt (DE); WILD, Markus, 85134 Stammham (DE)
(86) Internationale Anmeldenummer: PCT/EP2014/003437
(87) Internationale Veröffentlichungsnummer: WO 2015/090605

(56) Entgegenhaltungen:
- EP-A1- 1 431 617
- EP-A2- 1 180 588
- DE-A1- 10 131 322
- DE-A1-102010 052 004
- DE-A1-102011 116 609

## Beschreibung

Die Erfindung betrifft ein Koppelglied für einen Mehrgelenkskurbeltrieb einer Brennkraftmaschine, mit einem Koppelglied, das einen Koppelhebel und einen Lagerdeckel umfasst, wobei der Koppelhebel ein erstes Auge für einen Kolbenpleuel des Kurbeltriebs, ein zweites Auge für einen Anlenkpleuel des Kurbeltriebs und gemeinsam mit dem Lagerdeckel ein drittes Auge für einen Kurbelzapfen einer Kurbelwelle umgibt, wobei der Koppelhebel und der Lagerdeckel am äußeren Umfang des dritten Auges in einer durch die Mitte des dritten Auges verlaufenden Trennebene aneinander stoßen und durch zwei Schrauben miteinander verschraubt sind, und wobei die beiden Schrauben parallele Längsmittelachsen aufweisen. Die Erfindung betrifft weiter einen Mehrgelenkskurbeltrieb einer Brennkraftmaschine mit einer Mehrzahl von derartigen Koppelgliedern.

Koppelglieder der eingangs genannten Art werden in Mehrgelenkskurbeltrieben von Brennkraftmaschinen als Verbindungsglieder zwischen den mit den Kolben verbundenen Kolbenpleueln, den zugehörigen Kurbelzapfen der Kurbelwelle und zugehörigen, mit einer Exzenterwelle verbundenen Anlenkpleueln eingesetzt. Mittels des Mehrgelenkskurbeltriebs kann der Arbeitshub der Kolben der Brennkraftmaschine verstellt werden, so dass sich in unterschiedlichen Arbeitstakten der Brennkraftmaschine unterschiedliche Arbeitshübe des Kolbens ergeben. Unter dem Arbeitshub ist dabei die Entfernung zu verstehen, welche zwischen einem oberen und einem unteren Totpunkt des Kolbens liegt, also mithin der von dem Kolben während des Arbeitstakts maximal zurückgelegte Weg. Alternativ oder zusätzlich kann mittels des Mehrgelenkskurbeltriebs auch das Verdichtungsverhältnis eingestellt werden, das in dem zum Kolben zugehörigen Zylinder erreicht wird, insbesondere in Abhängigkeit von dem Betriebspunkt der Brennkraftmaschine und/oder dem Arbeitstakt des Zylinders.

Ein Koppelglied und ein Mehrgelenkskurbeltrieb sind bereits aus der DE 10 2011 116 609 A1 der Anmelderin bekannt. Das bekannte Koppelglied weist ein geteiltes drittes Auge auf und besteht aus einem Koppelhebel und einem durch zwei Schrauben mit dem Koppelhebel verbundenen Lagerdeckel, die jeweils eine Hälfte des dritten Auges bilden. Der Koppelhebel und der Lagerdeckel stoßen am äußeren Umfang des dritten Auges entlang von zwei Berührungslinien aneinander, die eine durch die Mitte des geteilten dritten Auges verlaufende Trennebene aufspannen. Um bei geringer Masse des Koppelglieds für eine hohe Festigkeit zu sorgen, sind der Koppelhebel und der Lagerdeckel durch zwei Schrauben miteinander verbunden, deren Längsmittelachsen nicht parallel zueinander sondern "windschief" ausgerichtet sind.

Aus dem Stand der Technik sind weiterhin die Druckschriften EP 1 247 960 A2, EP 1 914 405 A2 sowie JP 2004-124775 A bekannt.

Es hat sich gezeigt, dass sich Mehrgelenkskurbeltriebe mit Koppelgliedern, bei denen der Koppelhebel und der Lagerdeckel durch derartige "windschiefe" Schrauben miteinander verbunden sind, in einer Großserienfertigung nicht mit den erforderlichen Schraubenanzugs- und Überwachungsverfahren realisieren lassen.

Daher wird nach Lösungen gesucht, mit denen bei Koppelgliedern, deren Schrauben parallele Längsmittelachsen aufweisen, trotz geringer Koppelgliedmasse ebenfalls eine hohe Festigkeit erzielt werden kann. Dies stößt vor allem dann auf Schwierigkeiten, wenn der Abstand zwischen dem dritten Auge und dem ersten Auge so klein wie möglich gehalten und daher die Schraubenbohrung für die auf der Seite des ersten Auges angeordnete Schraube nicht mehr wie bei dem Koppelglied aus der DE 10 2011 116 609 A1 zwischen dem ersten und dem dritten Auge hindurch verlaufen soll.

Ausgehend hiervon liegt der Erfindung die Aufgabe zugrunde, ein Koppelglied und einen Mehrgelenkskurbeltrieb der eingangs genannten Art dahingehend zu verbessern, dass sich ohne "windschiefe" Schrauben zwischen dem Koppelhebel und dem Lagerdeckel bei geringer Masse des Koppelglieds eine hohe Festigkeit erzielen lässt.

Dies wird erfindungsgemäß dadurch erreicht, dass die Trennebene in Bezug zu einer durch die Mitte des Auges verlaufenden und zu den Längsmittelachsen der beiden Schrauben senkrechten Ebene unter einem spitzen Winkel geneigt ist, wobei an den äußeren Umfang des dritten Auges unmittelbar angrenzende paarweise gegenüberliegende Anlageflächen des Koppelhebels und des Lagerdeckels beiderseits des dritten Auges zu den Längsmittelachsen der beiden Schrauben senkrecht sind. Dies bedeutet zugleich, dass die Längsmittelachsen beider Schrauben nicht senkrecht zu der Trennebene sind.

Wenn die Trennebene auf der Seite des ersten Auges in einer Richtung vom ersten Auge weg geneigt ist, kann durch das erfindungsgemäße Merkmal der Koppelhebel auf der Seite des ersten Auges um die Schraubenbohrung herum um einige Millimeter verstärkt und damit die Schraubenbohrung um einige Millimeter vertieft oder verlängert werden. Dies gestattet es, die Schraubenbohrung auf der Seite des ersten Auges nicht wie bei dem Koppelglied aus der DE 10 2011 116 609 A1 zwischen dem ersten und dem dritten Auge hindurchzuführen, sondern "unterhalb" von dem ersten Auge, d.h. zwischen diesem und dem Lagerdeckel, anzuordnen. Dadurch kann wiederum der Abstand zwischen dem ersten Auge und dem dritten Auge sehr klein gehalten werden, was zu einer Reduzierung der Masse des Koppelglieds beiträgt.

Weiter kann gemäß einer bevorzugten Ausgestaltung der Erfindung anders als bei dem Koppelglied aus der DE 10 2011 116 609 A1 ein vom ersten Auge durchsetzter Hubarm des Koppelglieds als Gabelarm ausgebildet werden. Durch die Ausführung des Koppelglieds mit beidseitigem Gabelarm, das heißt sowohl auf der Seite des Hubarms mit dem ersten Auge und auf der Seite des Koppelarms mit dem zweiten Auge, wird erreicht, dass die hohe Komplexität und der damit verbundene hohe Bearbeitungsaufwand nur an einem Bauteil, nämlich dem Koppelhebel, anfallen, während die anderen Bauteile, nämlich der am ersten Auge mit dem Hubarm verbundener Kolbenpleuel und der am zweiten Auge mit dem Koppelarm verbundene Anlenkpleuel einfacher ausgebildet werden können.

Bei einem als Gabelarm ausgebildeten Hubarm kann die Schraubenbohrung des Koppelhebels auf der Seite des ersten Auges zweckmäßig als Durchgangsbohrung ausgebildet werden, die zwischen zwei Schenkeln des Gabelarms mündet und eine der beiden Schrauben aufnimmt. Diese Schraube auf der Seite des ersten Auges wird nachfolgend auch als erste Schraube bezeichnet wird, während die Schraube auf der Seite des zweiten Auges nachfolgend auch als zweite Schraube bezeichnet wird.

Um trotz der Neigung der Trennebene in Bezug zu der zu den Längsmittelachsen beider Schrauben senkrechten Ebene durch die Mitte des dritten Auges das Fügen des Koppelhebels und des Lagerdeckels bei der Montage des Koppelglieds zu erleichtern, weisen der Koppelhebel und der Lagerdeckel beiderseits des dritten Auges unmittelbar angrenzend an dessen äußeren Umfang gegenüberliegende Anlageflächen auf, die gemäß einer weiteren bevorzugten Ausgestaltung der Erfindung senkrecht zu den Längsmittelachsen der beiden Schrauben sind.

Wie bei dem Koppelglied aus der DE 10 2011 116 609 A1 sind die beiden Schrauben vorteilhaft unterschiedlich bemessen, wobei sie nicht nur unterschiedliche Durchmesser sondern auch erheblich unterschiedliche Längen besitzen. Dabei ist die erste Schraube zweckmäßig dünner und vorteilhaft auch erheblich kürzer als die zweite Schraube. Bei beiden Schrauben handelt es sich zweckmäßig um Dehnschaftschrauben, die auch Biegebelastungen aufnehmen können.

Wie bei dem Koppelglied aus der DE 10 2011 116 609 A1 liegen der Koppelhebel und der Lagerdeckel beiderseits vom Umfang des dritten Auges formschlüssig gegeneinander an, wobei sie dort jeweils mit komplementären ineinander greifenden Verzahnungen versehen sind. Die Verzahnung des Koppelhebels und des Lagerdeckels an der Seite des ersten Auges bzw. um die erste Schraube herum wird nachfolgend als erste Verzahnung bezeichnet, während die Verzahnung an der Seite des zweiten Auges bzw. um die zweite Schraube herum als zweite Verzahnung bezeichnet wird.

Die beiden komplementären Verzahnungen erstrecken sich jeweils entlang einer Teilungsebene, die durch die Spitzen der Zähne der Verzahnung des Koppelhebels definiert wird. Wie bei dem Koppelglied aus der DE 10 2011 116 609 A1 schneiden sich die beiden Teilungsebenen bzw. schließen einen Winkel ungleich 180 Grad ein. Die Teilungsebene der ersten Verzahnung des Koppelhebels wird nachfolgend als erste Teilungsebene bezeichnet, während die Teilungsebene der zweiten Verzahnung des Koppelhebels nachfolgend als zweite Teilungsebene bezeichnet wird.

Anders als bei dem Koppelglied aus der DE 10 2011 116 609 A1 schließen die Teilungsebenen der beiden Verzahnungen links und rechts des dritten Auges auch mit der durch die Mitte des Auges verlaufenden und zu den Längsmittelachsen der beiden Schrauben senkrechten Ebene unterschiedlich große Winkel ein, so dass sie sich nicht in einer zu dieser Ebene senkrechten Ebene durch die Mitte des dritten Auges schneiden. Stattdessen schneiden sich die erste und die zweite Teilungsebene näher bei der zweiten Schraube.

Auf diese Weise kann der letzte Zahn der zweiten Verzahnung an dem vom dritten Auge abgewandten Ende der zweiten Verzahnung weiter von einer Oberseite des Koppelhebels weg nach unten verlegt und dadurch in diesem Bereich die Höhe des Biegequerschnitts und damit die Biegefestigkeit des Koppelhebels vergrößert werden. Dies ist vor allem deshalb von Vorteil, weil die Höhe des Biegequerschnitts auf der Seite des zweiten Auges zu Gunsten eines höheren Querschnitts auf der Seite der ersten Auges verringert wird, wenn die Trennebene zur Verlängerung der Schraubenbohrung der ersten Schraube in Bezug zu der zu den Längsmittelachsen beider Schrauben senkrechten Ebene durch die Mitte des dritten Auges geneigt worden ist, wie zuvor beschrieben.

Vorteilhaft ist ein erster Winkel zwischen der Teilungsebene der ersten Verzahnung und der zu den Längsmittelachsen der beiden Schrauben senkrechten Ebene durch die Mitte des dritten Auges kleiner als ein zweiter Winkel zwischen dieser Ebene und der Teilungsebene der zweiten Verzahnung, wobei der erste Winkel zweckmäßig etwa 15 Grad und der zweite Winkel zweckmäßig etwa 20 Grad beträgt. Auf diese Weise kann ein guter Kompromiss zwischen einer ausreichenden Höhe des Biegequerschnitts auf der Seite des zweiten Auges einerseits und einer ausreichenden Länge der Schraubenbohrung auf der Seite des ersten Auges andererseits erzielt werden.

Während die erste Teilungsebene zweckmäßig etwa durch die Mitte des dritten Auges verläuft, weist die zweite Teilungsebene zweckmäßig einen seitlichen Versatz gegenüber der Mitte des dritten Auges auf und verläuft zweckmäßig durch das erste Auge, vorteilhaft etwa durch dessen Mitte.

Wie bei dem Koppelglied aus der DE 10 2011 116 609 A1 weisen die Zähne der ersten und zweiten Verzahnung Zahnflanken mit unterschiedlichen Anstellwinkeln in Bezug zur jeweiligen Teilungsebene auf, um die Berührungsflächen entlang der beiden Verzahnungen zu vergrößern und die Montierbarkeit sicherzustellen.

Die Erfindung wird nachfolgend anhand eines in der Zeichnung dargestellten Ausführungsbeispiels näher erläutert, ohne dass eine Beschränkung der Erfindung erfolgt. Dabei zeigen:
Fig. 1 eine schematische Schnittansicht von Teilen einer Brennkraftmaschine mit einem Mehrgelenkskurbeltrieb;
Fig. 2 eine perspektivische Ansicht eines Koppelglieds und eines Kolbenpleuels des Mehrgelenkskurbeltriebs;
Fig. 3 eine Seitenansicht des Koppelglieds mit einem Koppelhebel und einem Deckelteil;
Fig. 4 eine teilweise geschnittene Seitenansicht des Koppelhebels.

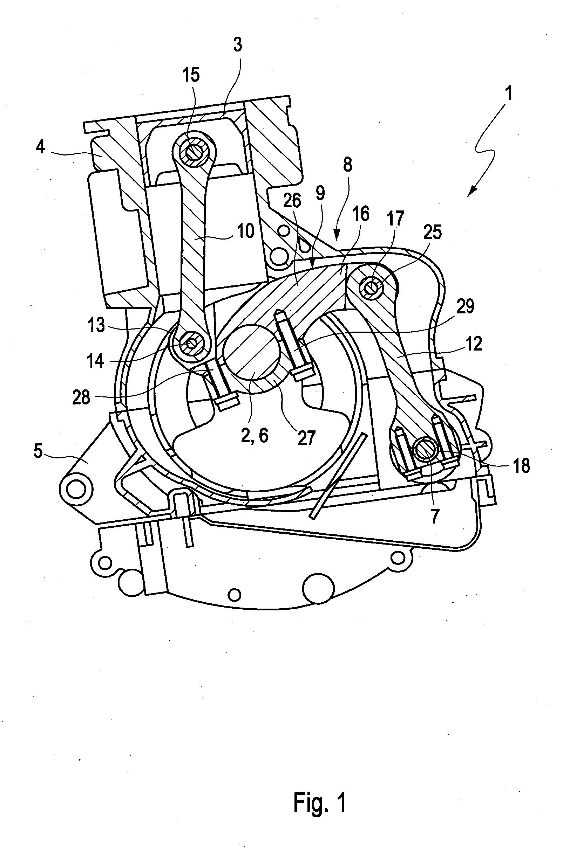

Bei der in Fig. 1 dargestellten Brennkraftmaschine 1 handelt es sich um eine Reihenbrennkraftmaschine, genauer als Viertakt-Vierzylinder-Reihenbrennkraftmaschine. Die Brennkraftmaschine 1 verfügt über eine Kurbelwelle 2 und vier Kolben 3 (nur einer dargestellt), die jeweils in einem Zylinder 4 hin und her beweglich sind. Die Kurbelwelle 2 ist in Wellenlagern (nicht dargestellt) eines Zylinderkurbelgehäuses 5 drehbar gelagert und umfasst fünf zur Lagerung dienende zentrische Wellenzapfen (nicht sichtbar) sowie vier Hub- oder Kurbelzapfen 6 (nur einer dargestellt), deren Längsmittelachsen in unterschiedlichen Winkelausrichtungen parallel zur Drehachse der Kurbelwelle 2 verlaufen und in Bezug zu dieser Drehachse in unterschiedlichen Winkelausrichtungen angeordnet sind. Die Brennkraftmaschine 1 umfasst weiter eine Exzenterwelle 7 mit einer zur Drehachse der Kurbelwelle 2 parallelen Drehachse, die neben und etwas unterhalb von der Kurbelwelle 2 im Zylinderkurbelgehäuse 5 drehbar gelagert ist, sowie einen Mehrgelenkskurbeltrieb 8 mit vier Koppelgliedern 9, die jeweils auf einem der Kurbelzapfen 6 der Kurbelwelle 2 drehbar gelagert sind, wobei sie auf einer Seite der Kurbelwelle 2 durch einen Kolbenpleuel 10 mit einem der Kolben 3 und auf der anderen Seite der Kurbelwelle 2 durch einen Anlenkpleuel 12 mit der Exzenterwelle 7 verbunden sind.

Jedes Koppelglied 9 umfasst einen kürzeren Hubarm 13, der über ein Schwenkgelenk 14 schwenkbar mit einem unteren Ende von einem der Kolbenpleuel 10 verbunden ist. Ein oberes Ende des jeweiligen Kolbenpleuels 10 ist über ein weiteres Schwenkgelenk 15 am zugehörigen Kolben 3 angelenkt. Insgesamt ist also jeder der vier Kolben 3 durch den jeweiligen Kolbenpleuel 10 und das jeweilige Koppelglied 9 mit der Kurbelwelle 2 verbunden.

Weiter umfasst jedes Koppelglied 9 einen längeren Koppelarm 16, der über ein Schwenkgelenk 17 schwenkbar mit einem oberen Ende von einem der Anlenkpleuel 12 verbunden ist. Ein unteres Ende des jeweiligen Anlenkpleuels 12 ist über ein weiteres Schwenkgelenk 18 an der Exzenterwelle 7 angelenkt.

Die Anlenkpleuel 12 sind ungefähr parallel zu den Kolbenpleueln 10 ausgerichtet und in axialer Richtung der Kurbelwelle 2 und der Exzenterwelle 7 jeweils in etwa derselben Ebene wie der dazugehörige Kolbenpleuel 10 angeordnet.

Mittels des Mehrgelenkskurbeltriebs 8 kann das Verdichtungsverhältnis der Brennkraftmaschine 1 verändert und die Neigung der Kolbenpleuel 10 in Bezug zur Zylinderachse der zugehörigen Zylinder 4 während der Drehung der Kurbelwelle 2 verringert werden, was zu einer Verringerung der Kolbenseitenkräfte und damit der Reibkräfte zwischen den Kolben 3 und Zylinderwänden der Zylinder 4 führt.

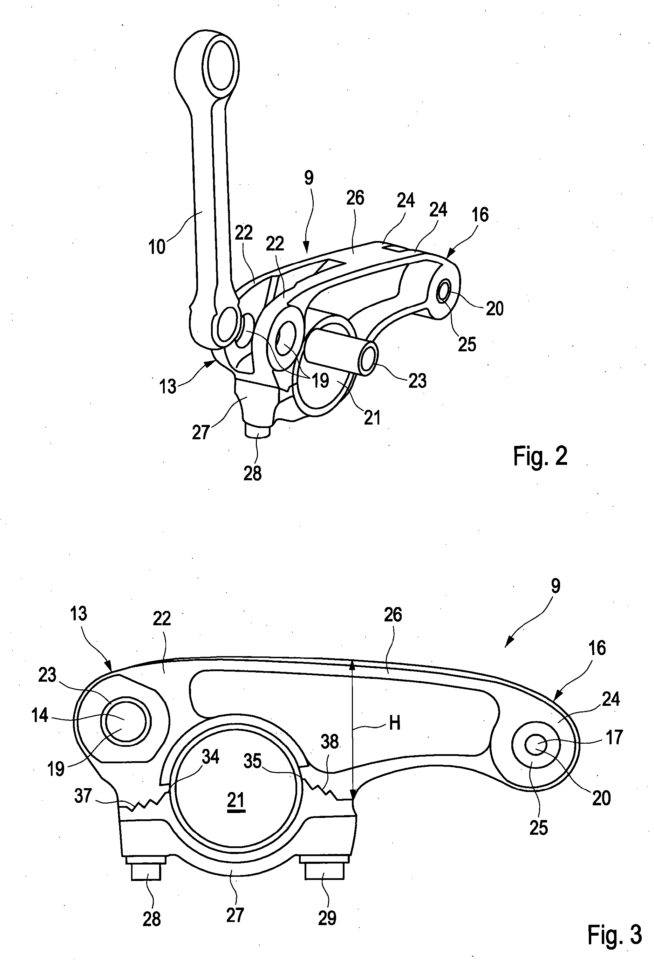

Wie am besten in Fig. 2, 3 und 4 dargestellt, weist jedes Koppelglied 9 ein erstes Auge 19, ein zweites Auge 20 und ein drittes Auge 21 auf. Das erste Auge 19 erstreckt sich durch zwei Gabelschenkel 22 des Hubarms 13 und bildet zusammen mit einem zugehörigen Lagerbolzen 23 das Schwenkgelenk 14 für das untere Ende des Kolbenpleuels 10. Das zweite Auge 20 erstreckt sich durch zwei Gabelschenkel 24 des Koppelarms 16 und bildet zusammen mit einem zugehörigen Lagerbolzen 25 das Schwenkgelenk 17 für das obere Ende des Anlenkpleuels 12. Das dritte Auge 21 ist zwischen dem ersten und dem zweiten Auge 19 bzw. 20 angeordnet, weist einen größeren Durchmesser auf und dient zur Aufnahme eines Kurbelzapfens 6.

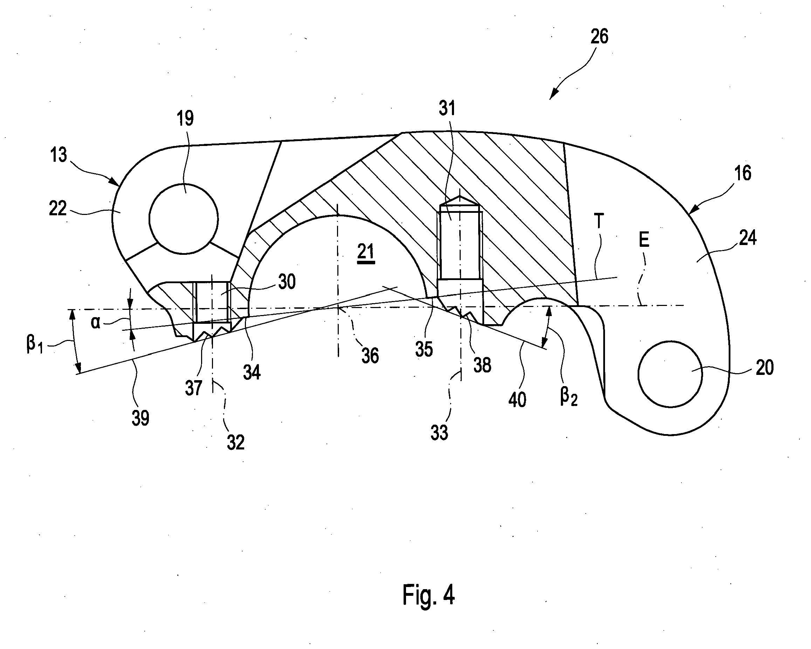

Damit sich das Koppelglied 9 auf dem Kurbelzapfen 6 anbringen lässt, ist das dritte Auge 21 ein geteiltes Auge. Zu diesem Zweck besteht das Koppelglied 9 aus einem Koppelhebel 26 und einem Lagerdeckel 27, die durch zwei Schrauben 28, 29 beiderseits des Auges 21 fest miteinander verbunden sind. Wie am besten in Fig. 4 dargestellt, weisen die beiden Schrauben 28, 29 ebenso wie die zugehörigen Innengewinde- oder Schraubenbohrungen 30, 31 im Koppelhebel 12 und Durchgangsbohrungen (nicht sichtbar) im Lagerdeckel 27 parallele Längsmittelachsen 32, 33 auf.

Bei der ersten Schraube 28 auf der Seite des ersten Auges 19 handelt es sich um eine kurze M9-Schraube, während es sich bei der zweiten Schraube 29 auf der Seite des zweiten Auges 20 um eine längere M11 Schraube handelt. Beide Schrauben 28, 29 sind als Dehnschaftschrauben ausgeführt, so dass sie Biegebelastungen besser aushalten können.

Der Koppelhebel 26 und der Lagerdeckel 27 erstrecken sich jeweils um 180 Grad um den äußeren Umfang des Auges 21 herum und weisen am äußeren Umfang des Auges 21 zwei Paare von gegenüberliegenden ebenen Anlageflächen 34, 35 auf. Die unmittelbar an den äußeren Umfang des Auges 21 angrenzenden inneren Enden der Anlageflächen 34, 35 spannen in der dargestellten Ausführungsform eine Trennebene T auf, die durch die Mitte 36 des Auges 21 bzw. durch die Mittelachse des im Auge 21 gelagerten Kurbelzapfens 6 verläuft. Erfindungsgemäß ist es dagegen vorgesehen, dass die an den äußeren Umfang des dritten Auges 21 unmittelbar angrenzenden paarweise gegenüberliegenden Anlageflächen 34, 35 des Koppelhebel 26 und des Lagerdeckels 27 beiderseits des dritten Auges 21 zu den Längsmittelachsen 32, 33 der beiden Schrauben 28, 29 senkrecht sind.

Wie am besten in Fig. 4 dargestellt, ist die Trennebene T in Bezug zu einer zu den Längsmittelachsen 32, 33 der Schrauben 28, 29 senkrechten Ebene E durch die Mitte 36 des dritten Auges 21 unter einem spitzen Winkel α von etwa 5 Grad geneigt. Damit sind auch die Längsmittelachsen 32, 33 der Schrauben 28, 29 nicht senkrecht zur Trennebene T ausgerichtet. Die Richtung der Neigung der Trennebene T ist so gewählt, dass diese auf der Seite des ersten Auges 19 einen größeren Abstand als die Ebene E von der Mitte des ersten Auges 19 aufweist. Dadurch kann der Hubarm 13 unterhalb vom ersten Auge 19 dicker gemacht und damit die Länge der Schraubenbohrung 30 so weit vergrößert werden, dass diese nicht mehr wie bei dem Koppelglied aus der DE 10 2011 116 609 A1 zwischen dem ersten und dem dritten Auge 19 bzw. 21 hindurchgeführt werden muss, sondern vollständig unterhalb vom ersten Auge 19 angeordnet werden kann.

Dadurch ist es anders als bei dem Koppelglied aus der DE 10 2011 116 609 A1 auch möglich, nicht nur den Koppelarm 16 sondern auch den Hubarm 13 als Gabelarm mit zwei Gabelschenkeln 24 bzw. 22 auszubilden. Dadurch kann die Masse des Koppelglieds 9 reduziert und der Kolbenpleuel 10 im Bereich des Schwenkgelenks 14 ohne Gabelung ausgeführt werden, wodurch einerseits die Masse des Kolbenpleuels 10 und damit die im Zylinder auf und ab bewegliche Masse reduziert und andererseits die Bauweise des Kolbenpleuels 10 vereinfacht und damit der Aufwand zu dessen Herstellung reduziert werden kann. Das Schwenklager 14 kommt ohne eine Druckölversorgung aus, da das vom Kolben 3 nach unten in das Zylinderkurbelgehäuse 5 zurücklaufende Kühlöl hier für eine ausreichende Schmierung sorgt.

Wie aus Fig. 4 ersichtlich ist, kann zudem die Schraubenbohrung 30 als Durchgangsbohrung ausgebildet werden, die in den Zwischenraum zwischen den beiden Gabelschenkeln 22 des Hubarms 13 mündet.

Wie aus einem Vergleich mit dem Koppelglied aus der DE 10 2011 116 609 A1 ersichtlich ist, kann darüber hinaus auch noch der Mittenabstand der beiden Augen 19, 21 verkleinert werden, was eine weitere Reduzierung der Masse des Koppelglieds 9 erlaubt und die Gestaltungsmöglichkeiten der Gesamt-Kurbeltriebs-Kinematik verbessert..

Der Koppelhebel 26 und der Lagerdeckel 27 liegen beiderseits vom Auge 21 formschlüssig gegeneinander an. Dazu ist der Koppelhebel 26 um die Mündung der Schraubenbohrung 30 der ersten Schraube 28 herum mit einer ersten Verzahnung 37 und um die Mündung der Schraubenbohrung 31 der zweiten Schraube 29 herum mit einer zweiten Verzahnung 38 versehen. Nach der Montage des Koppelgliedes 10 stehen die erste und zweite Verzahnung 37, 38 jeweils formschlüssig mit einer gegenüberliegenden komplementären ersten bzw. zweiten Verzahnung 37, 38 des Lagerdeckels 27 im Zahneingriff, wie am besten in Fig. 3 dargestellt. Die beiden Anlageflächen 34, 35 bilden jeweils einen an das Auge 21 angrenzenden Teil dieser Verzahnungen 37, 38.

Die Verbindung zwischen dem Koppelhebel 26 und dem Lagerdeckel 27 durch zwei formschlüssige Verzahnungen 37, 38 ermöglichen den Einsatz eines hochfesten und damit nicht crackbaren Vergütungsstahls, mit dem im Vergleich zu einer crackbaren Ausführung des Koppelglieds 9 ebenfalls eine Massenreduzierung möglich ist.

Wie am besten in Fig. 4 dargestellt, spannen die Spitzen der Zähne der ersten Verzahnung 37 des Koppelhebels 26 eine erste Teilungsebene 39 und die Spitzen der Zähne der zweiten Verzahnung 38 des Koppelhebels 26 eine zweite Teilungsebene 40 auf. Die beiden Teilungsebenen 39, 40 schließen sowohl mit der Trennebene T als auch mit der Ebene E unterschiedliche Neigungswinkel β ein. Während der Neigungswinkel β1 zwischen der ersten Teilungsebene 39 und der Ebene E 20 Grad beträgt, ist der Neigungswinkel β2 zwischen der zweiten Teilungsebene 40 und der Ebene E kleiner und beträgt nur 15 Grad. Dadurch kann die in Fig. 3 durch einen Doppelpfeil angezeigte Höhe H des Biegequerschnitts zwischen der Oberseite des Koppelarms 26 und dem vom Auge 21 abgewandten Ende der zweiten Verzahnung 38 und damit die Biegefestigkeit des Koppelgliedes 9 an dieser Stelle vergrößert werden, um die geringere Höhe des Biegequerschnitts infolge der Neigung oder Verdrehung der Trennebene T in Bezug zur Ebene E etwas zu kompensieren.

Wie am besten in Fig. 4 dargestellt, erstreckt sich die erste Teilungsebene 39 durch die Mitte 36 des dritten Auges 21 bzw. durch die Mittelachse des im dritten Auge 21 gelagerten Kurbelzapfens 6. Demgegenüber erstreckt sich die zweite Teilungsebene 40 bzw. deren Verlängerung etwa durch die Mitte des ersten Auges 19 und weist einen seitlichen Versatz gegenüber der Mitte 36 des dritten Auges 21 auf. Die beiden Teilungsebenen 39, 40 schneiden sich zwar innerhalb des dritten Auges 21, jedoch nicht in der Mitte zwischen den beiden Schrauben 28, 29, sondern näher bei der zweiten Schraube 29, wobei der Abstand des Schnittpunks von der Längsmittelachse 32 der ersten Schraube 28 das 3- bis 4-fache des Abstands von der Längsmittelachse 33 der zweiten Schraube 29 beträgt.

Wie bei dem Koppelglied aus der DE 10 2011 116 609 A1 weisen sowohl bei der ersten Verzahnung 37 als auch bei der zweiten Verzahnung 38 die beiden Zahnflanken jedes Zahns unterschiedliche Anstellwinkel gegenüber der zugehörigen ersten bzw. zweiten Teilungsebene 39 bzw. 40 auf.

## Patentansprüche

1. Koppelglied (9) für einen Mehrgelenkskurbeltrieb (8) einer Brennkraftmaschine (1), mit einem Koppelhebel (26) und einem Lagerdeckel (27), wobei der Koppelhebel (26) ein erstes Auge (19) für einen Kolbenpleuel (10) des Kurbeltriebs (8), ein zweites Auge (20) für einen Anlenkpleuel (12) des Kurbeltriebs (8) und gemeinsam mit dem Lagerdeckel (27) ein drittes Auge (21) für einen Kurbelzapfen (6) einer Kurbelwelle (2) umgibt, wobei der Koppelhebel (26) und der Lagerdeckel (27) am äußeren Umfang des dritten Auges (21) in einer durch die Mitte (36) des dritten Auges (21) verlaufenden Trennebene (T) aneinander stoßen und durch zwei Schrauben (28, 29) miteinander verschraubt sind, **dadurch gekennzeichnet, dass** die beiden Schrauben (28, 29) parallele Längsmittelachsen (32, 33) aufweisen, und dass die Trennebene (T) in Bezug zu einer durch die Mitte des Auges (36) verlaufenden und zu den Längsmittelachsen (32, 33) der beiden Schrauben (28, 29) senkrechten Ebene (E) unter einem spitzen Winkel (α) geneigt ist, wobei an den äußeren Umfang des dritten Auges (21) unmittelbar angrenzende paarweise gegenüberliegende Anlageflächen (34, 35) des Koppelhebels (26) und des Lagerdeckels (27) beiderseits des dritten Auges (21) zu den Längsmittelachsen (32, 33) der beiden Schrauben (28, 29) senkrecht sind.

2. Koppelglied nach Anspruch 1, **dadurch gekennzeichnet, dass** die Trennebene (T) auf der Seite des ersten Auges (19) in einer Richtung vom ersten Auge (19) weg geneigt ist.

3. Koppelglied nach Anspruch 1 oder 2, **dadurch gekennzeichnet, dass** die Längsmittelachse (32) der auf der Seite des ersten Auges (19) angeordneten ersten Schraube (28) durch das erste Auge (19, 21) hindurch verläuft.

4. Koppelglied nach einem der vorangehenden Ansprüche, **dadurch gekennzeichnet, dass** ein vom ersten Auge (19) durchsetzter Hubarm (13) des Koppelglieds (9) als Gabelarm mit zwei Gabelschenkeln (22) ausgebildet ist.

5. Koppelglied nach Anspruch 3 und 4, **dadurch gekennzeichnet, dass** die Schraubenbohrung (30) eine zwischen den Gabelschenkeln (22) mündende Durchgangsbohrung ist.

6. Koppelglied nach einem der vorangehenden Ansprüche, **dadurch gekennzeichnet, dass** die Schrauben (28, 29) Dehnschaftschrauben sind.

7. Koppelglied nach einem der vorangehenden Ansprüche, **dadurch gekennzeichnet, dass** der Koppelhebel (26) und der Lagerdeckel (27) beiderseits des Umfangsrandes des dritten Auges (21) jeweils mit komplementären Verzahnungen (37, 38) formschlüssig gegeneinander anliegen.

8. Koppelglied nach Anspruch 7, **dadurch gekennzeichnet, dass** zwei von Scheiteln der Zähne der Verzahnungen (37, 38) des Koppelhebels (26) aufgespannte Teilungsebenen (39, 40) unterschiedlich große Winkel (β1, β2) mit der Ebene (E) einschließen.

9. Koppelglied (9) nach Anspruch 7 oder 8, **dadurch gekennzeichnet, dass** die beiden Zahnflanken von jedem Zahn der beiden Verzahnungen (37, 38) unterschiedliche Anstellwinkel gegenüber der zugehörigen ersten bzw. zweiten Teilungsebene (39 bzw. 40) aufweisen.

10. Koppelglied (9) nach einem der Ansprüche 7 bis 9, **dadurch gekennzeichnet, dass** die Zähne der beiden Verzahnungen (37, 38) des Koppelhebels (26) in Richtung der Längsmittelachsen (32, 33) der beiden Schrauben (28, 29) keine Hinterschneidungen aufweisen.

11. Mehrgelenkskurbeltrieb (8) einer Brennkraftmaschine, **gekennzeichnet durch** eine Mehrzahl von Koppelgliedern (9) nach einem der vorangehenden Ansprüche.

## Claims

1. Coupling element (9) for a multi-joint crank drive (8) of an internal combustion engine (1), with a coupling lever (26) and a bearing cover (27), wherein the coupling lever (26) has a first eye (19) for a piston connecting rod (10) of the crank drive (8), a second eye (20) for an articulation connecting rod (12) of the crank drive (8), and together with the bearing cover (27) surrounds a third eye (21) for a crank pin (6) of a crank shaft (2), wherein the coupling lever (26) and the bearing cover (27) abut each other at an outer periphery of the third eye (21) on a separating plane (T) which extends through the centre (36) of the third eye (21) and are screwed to one another by means of two bolts (28, 29), **characterised in that** the two bolts (28, 29) have parallel longitudinal central axes (32, 33), and the separating plane (T) is tilted at an acute angle (a) in relation to a plane (E) which extends through the centre of the eye (36) and is perpendicular to the longitudinal central axes (32, 33) of the two bolts (28, 29), wherein contact surfaces (34, 35) of the coupling lever (26) and the bearing cover (27), which are immediately adjacent to the outer periphery of the third eye (21) and are arranged in pairs opposite to each other, are on both sides of the third eye (21) perpendicular to the longitudinal central axes (32, 33) of the two bolts (28, 29).

2. Coupling element according to claim 1, **characterised in that** the separating plane (T) is inclined on the side of the first eye (19) in a direction away from the first eye (19).

3. Coupling element according to claim 1 or 2, **characterised in that** the longitudinal central axis (32) of the first bolt (28) which is arranged on the side of the first eye (19) extends through the first eye (19, 21).

4. Coupling element according to any of the preceding claims, **characterised in that** a lift arm (13) of the coupling element (9) which is penetrated by the first eye (19) is configured as a fork arm with two fork limbs (22).

5. Coupling element according to claim 3 or 4, **characterised in that** the screw hole (30) is a throughbore opening between the fork limbs (22).

6. Coupling element according to any of the preceding claims, **characterised in that** the bolts (28, 29) are antifatigue bolts.

7. Coupling element according to any of the preceding claims, **characterised in that** the coupling lever (26) and the bearing cover (27) form-fittingly abut each other with complementary toothed surfaces (37, 38) on both sides of the circumferential edge of the third eye (21).

8. Coupling element according to claim 7, **characterised in that** two dividing planes (39, 40) which are spanned by the tips of the teeth of the toothed surfaces (37, 38) of the coupling lever (26) enclose differently sized angles (β1, β2) with the plane (E).

9. Coupling element (9) according to claim 7 or 8, **characterised in that** the two tooth flanks of each tooth of the two toothed surfaces (37, 38) define different angular orientations in relation to the corresponding first or second dividing plane (39 or 40).

10. Coupling element (9) according to any of claims 7 to 9, **characterised in that** the teeth of the two toothed surfaces (37, 38) of the coupling lever (26) are devoid from undercuts in the direction of the longitudinal central axes (32, 33) of the two bolts (28, 29).

11. Multi-joint crank drive (8) of an internal combustion engine, **characterised by** a plurality of coupling elements (9) according to any of the preceding claims.

## Revendications

1. Organe d'accouplement (9) pour un embiellage à plusieurs articulations (8) d'un moteur à combustion interne (1), avec un levier d'accouplement (26) et un couvercle de palier (27), dans lequel le levier d'accouplement (26) entoure un premier oeillet (19) pour une bielle de piston (10) de l'embiellage (8), un deuxième oeillet (20) pour une bielle articulée (12) de l'embiellage (8) et conjointement avec le couvercle de palier (27), un troisième oeillet (21) pour un maneton (6) d'un vilebrequin (2), dans lequel le levier d'accouplement (26) et le couvercle de palier (27) butent l'un contre l'autre au niveau de la périphérie extérieure du troisième oeillet (21) dans un plan de séparation (T) s'étendant au travers du milieu (36) du troisième oeillet (21) et sont vissés par deux vis (28, 29) l'un à l'autre, **caractérisé en ce que** les deux vis (28, 29) présentent des axes médians longitudinaux (32, 33) parallèles, et que le plan de séparation (T) est incliné par rapport à un plan (E) s'étendant au travers du milieu de l'oeillet (36) et perpendiculaire aux axes médians longitudinaux (32, 33) des deux vis (28, 29) selon un angle aigu (α), dans lequel des surfaces d'appui (34, 35), opposées par paires directement contiguës à la périphérie extérieure du troisième oeillet (21), du levier d'accouplement (26) et du couvercle de palier (27) de part et d'autre du troisième oeillet (21) sont perpendiculaires aux axes médians longitudinaux (32, 33) des deux vis (28, 29).

2. Organe d'accouplement selon la revendication 1, **caractérisé en ce que** le plan de séparation (T) est incliné sur le côté du premier oeillet (19) dans une direction loin du premier oeillet (19).

3. Organe d'accouplement selon la revendication 1 ou 2, **caractérisé en ce que** l'axe médian longitudinal (32) de la première vis (28) agencée sur le côté du premier oeillet (19) s'étend au travers du premier oeillet (19, 21).

4. Organe d'accouplement selon l'une des revendications précédentes, **caractérisé en ce qu'**un bras de levage (13), traversé par le premier oeillet (19), de l'organe d'accouplement (9) est réalisé comme bras de fourche avec deux branches de fourche (22).

5. Organe d'accouplement selon les revendications 3 et 4, **caractérisé en ce que** le perçage de vis (30) est un perçage traversant débouchant entre les branches de fourche (22).

6. Organe d'accouplement selon l'une des revendications précédentes, **caractérisé en ce que** les vis (28, 29) sont des vis à tige allégée.

7. Organe d'accouplement selon l'une des revendications précédentes, **caractérisé en ce que** le levier d'accouplement (26) et le couvercle de palier (27) reposent l'un contre l'autre à complémentarité de formes de part et d'autre du bord périphérique du troisième oeillet (21) respectivement avec des dentures (37, 38) complémentaires.

8. Organe d'accouplement selon la revendication 7, **caractérisé en ce que** deux plans de séparation (39, 40) définis par des sommets des dents des dentures (37, 38) du levier d'accouplement (26) incluent des angles (β1, β2) de différente grandeur avec le plan (E).

9. Organe d'accouplement (9) selon la revendication 7 ou 8, **caractérisé en ce que** les deux flancs de dent de chaque dent des deux dentures (37, 38) présentent différents angles d'attaque par rapport au premier ou second plan de séparation (39 ou 40) afférent.

10. Organe d'accouplement (9) selon l'une des revendications 7 à 9, **caractérisé en ce que** les dents des deux dentures (37, 38) du levier d'accouplement (26) ne présentent aucune contre-dépouille dans le sens des axes médians longitudinaux (32, 33) des deux vis (28, 29).

11. Embiellage à plusieurs articulations (8) d'un moteur à combustion interne, **caractérisé par** une pluralité d'organes d'accouplement (9) selon l'une des revendications précédentes.
